# EUROPÄISCHE PATENTSCHRIFT

(11) **EP 4 401 857 B1**
(45) Veröffentlichungstag und Bekanntmachung des Hinweises auf die Patenterteilung: **14.01.2026**
(21) Anmeldenummer: 22769680.4
(22) Anmeldetag: 29.08.2022
(51) Int. Cl.: B01D 45/08, B01D 45/12

(54) **FLÜSSIGKEITSABSCHEIDEVORRICHTUNG FÜR EIN KOMPRESSORSYSTEM, GROBABSCHEIDER FÜR EINE SOLCHE FLÜSSIGKEITSABSCHEIDEVORRICHTUNG SOWIE FLÜSSIGKEITSABSCHEIDESYSTEM**
LIQUID SEPARATION DEVICE FOR A COMPRESSOR SYSTEM, COARSE SEPARATOR FOR SUCH A LIQUID SEPARATION DEVICE, AND LIQUID SEPARATION SYSTEM
DISPOSITIF DE SÉPARATION DE LIQUIDE POUR UN SYSTÈME DE COMPRESSEUR, SÉPARATEUR GROSSIER POUR UN TEL DISPOSITIF DE SÉPARATION DE LIQUIDE, ET SYSTÈME DE SÉPARATION DE LIQUIDE

(30) Priorität: 15.09.2021 DE 102021210219
(43) Veröffentlichungstag der Anmeldung: 24.07.2024
(73) Patentinhaber: KNORR-BREMSE Systeme für Schienenfahrzeuge GmbH, 80809 München (DE)
(72) Erfinder: KRAMLICH, Adrian, 80807 München (DE); KIPP, Thomas, 81547 München (DE); HERDEN, Marc-Oliver, 81377 München (DE); KUHN, Wolfgang, 80807 München (DE); WINKLER, Michael, 80807 München (DE); SPRINGL, Cornelia, 83233 Bernau am Chiemsee (DE); GRAW, Johannes, 80335 München (DE)
(86) Internationale Anmeldenummer: PCT/EP2022/073945
(87) Internationale Veröffentlichungsnummer: WO 2023/041313

(56) Entgegenhaltungen:
- WO-A1-2012/039056
- DE-A1- 3 407 219
- JP-A- 2013 044 456
- US-A1- 2004 004 065

## Beschreibung

Die vorliegende Erfindung betrifft eine Flüssigkeitsabscheidevorrichtung für ein Kompressorsystem, einen Grobabscheider für eine solche Flüssigkeitsabscheidevorrichtung sowie ein Flüssigkeitsabscheidesystem mit einer solchen Flüssigkeitsabscheidevorrichtung und/oder einem solchen Grobabscheider.

In Kompressorsystemen, wie beispielsweise in Kompressorsystemen mit einem ölgeschmierten Schraubenkompressor, kann die durch den Kompressor verdichtete Luft ein zur Schmierung und Kühlung genutztes Öl enthalten. Zur Rückhaltung des Öls im Kompressorsystem zur weiteren Verwendung oder zumindest zur Verminderung einer übermäßigen Ölabgabe an eine äußere Umgebung des Kompressorsystems werden Flüssigkeitsabscheidesystem bzw. hier dann Ölabscheidesysteme genutzt. Solche Flüssigkeitsabscheidesysteme weisen beispielsweise einen Grobabscheider und einen Feinabscheider auf. Als Grobabscheider werden einfache wartungsfreie Konstruktionen eingesetzt. Gegen solche auch als Prallbleche bekannten Konstruktionen wird das verdichtete Luft-Öl-Gemisch aus einem Kompressor über einen Druckstutzen mit verhältnismäßig großem Winkel geleitet. In Abhängigkeit der Auftreffgeschwindigkeit und des Auftreffwinkels entstehen durch den Aufprall des Luft-Öl-Gemisches unterschiedlich große Öltropfen. Vergleichsweise größere Tropfen schwerkraftsbedingt direkt von der Prallplatte oder in einem prallplattennahen Bereich in einen Ölsumpf. Die durch den Aufprall entstehenden kleineren Tropfen werden allerdings als Sekundärzerstäubung von der Gemischströmung weiter in Richtung des Feinabscheiders transportiert. Je höher der verbleibende Anteil des Öls in dem den Feinabscheider erreichenden Luft-Öl-Gemisches ist, desto geringer ist die Standzeit des Feinabscheiders bzw. eines beispielsweise hierfür eingesetzten Koaleszenzfilters. Darüber hinaus wird das Kompressorsystem ineffizienter je größer die im Feinabscheider abzusaugende Ölmenge ist.

In diesem Zusammenhang betrifft die WO 2012/039056 A1 einen Auffangtank mit verbesserter Ölabscheidungsleistung. Dabei ist eine Führungsplatte ist innerhalb eines zylindrischen Tankkörpers an dessen oberem Teil angebracht, um einen Führungsströmungspfad zwischen der Führungsplatte und der Innenwand des Tankkörpers zu bilden, wobei der Tankkörper an seiner oberen Endseite eine Gasauslassöffnung aufweist.

Die JP 2013 044456 A betrifft einen Ölabscheider, der Kältemaschinenöl von einer Mischflüssigkeit, die durch Mischen eines Kühlmittels und des Kältemaschinenöls entsteht, trennt. Die Kühlkreislaufvorrichtung einschließlich des Ölabscheiders ist mit einer Kollisionsfläche ausgestattet, damit das gemischte Fluid mit der Oberfläche kollidieren kann.

Die US 2004/004065 A1 betrifft einen Ölabscheider, der mit einer Kombination aus Schweißgerät und Luftkompressor verwendet werden kann. Der Ölabscheider umfasst ein zylindrisches Gehäuse mit einem Einlass, der den ölhaltigen Druckluftstrom vom Luftkompressor aufnimmt. Im Ölabscheider befindet sich ein Abweiser, der den Ölfluss auf einen wirbelnden, nach unten gerichteten Weg entlang der Innenfläche des zylindrischen Gehäuses umleitet. Dort wird die Luft abgeschieden und strömt nach oben, um durch einen Flüssigkeitsauslass im Deckel des Abscheiders auszutreten.

Die DE 34 07 219 A1 betrifft eine Vorrichtung zum Abscheiden von Fremdstoffen aus einem Gasstrom mit mindestens einer Leitfläche, die einen in Anströmrichtung sich verengenden Eintrittskanal bildet und in einem hinteren Rand endet, mindestens einer konkaven Prallfläche, die mit Abstand um den hinteren Rand der zugehörigen Leitfläche herumgewölbt ist, so dass sie den Gasstrom umlenkt, und mindestens einen Austrittskanal, durch den der Gasstrom zumindest annähernd parallel zur Anströmrichtung austritt.

In Anbetracht der vorstehenden Ausführungen liegt der vorliegenden Erfindung die Aufgabe zugrunde, eine Flüssigkeitsabscheidevorrichtung für ein Kompressorsystem, einen Grobabscheider für eine solche Flüssigkeitsabscheidevorrichtung sowie ein Flüssigkeitsabscheidesystem mit einer solchen Flüssigkeitsabscheidevorrichtung und/oder einem solchen Grobabscheider bereitzustellen, durch die die Effizienz einer Flüssigkeitsabscheidung für das Kompressorsystem erhöht werden kann.

Die Aufgabe wird durch eine Flüssigkeitsabscheidevorrichtung, einen Grobabscheider sowie ein Flüssigkeitsabscheidesystem gemäß den nebengeordneten Ansprüchen gelöst. Vorteilhafte Weiterbildungen der Erfindung sind in den abhängigen Ansprüchen enthalten.

Erfindungsgemäß weist eine Flüssigkeitsabscheidevorrichtung für ein Kompressorsystem einen Grobabscheider, der zumindest eine Abscheidefläche aufweist und zumindest eine Gemischzuführung, die dazu konfiguriert ist, der Abscheidefläche ein Luft-Flüssigkeitsgemisch zuzuführen, auf. Die Gemischzuführung ist mit einem der Abscheidefläche zugwandten Gemischzuführungsauslass ausgebildet, der derart im Verhältnis zur Abscheidefläche des Grobabscheiders angeordnet ist, dass eine auf die Abscheidefläche treffende Gemischströmung im Wesentlichen tangential über zumindest einen Abschnitt der Abscheidefläche geführt wird, und weiter vorzugsweise die Abscheidefläche tangential angeströmt wird, d.h. die Gemischströmung tangential auf die Abscheidefläche auftrifft.

Die Gemischzuführung kann beispielsweise ein Druckstutzen sein, über den das Luft-Flüssigkeitsgemisch aus einem Kompressor abgeleitet und über einen Druckstutzenausgang als Gemischzuführungsauslass dem Grobabscheider zuführbar ist. Die Gemischzuführung bzw. der Gemischzuführungsauslass ist derart auf die zur Abscheidung der Flüssigkeit aus dem Luft-Flüssigkeitsgemisch an dem Grobabscheider vorgesehene Abscheidefläche gerichtet, dass die Abscheidefläche im Wesentlichen tangential angeströmt wird oder zumindest in einem Winkel, der eine wesentliche, also zumindest überwiegende, tangentiale Weiterleitung der Gemischströmung an der Abscheidefläche erlaubt. Demnach prallt die Gemischströmung nicht überwiegend an der Abscheidefläche ab, sondern wird überwiegend in Kontakt mit der Abscheidefläche geführt. Mit anderen Worten wird der Auftreffwinkel des Luft-Flüssigkeitgemisches auf die Abscheidefläche durch entsprechende Anordnung der Gemischzuführung bzw. des Gemischzuführungsauslasses in Bezug auf die Abscheidefläche gegenüber einer im Sinne einer Prallplatte genutzten Abscheidefläche verkleinert. Der Auftreffwinkel zwischen dem zuströmenden Luft-Flüssigkeitsgemisch und der Abscheidefläche aus Richtung des zuströmenden Luft-Flüssigkeitgemisches beträgt insbesondere 0° bis 50°, bevorzugt 0° bis 40°, besonders bevorzugt 0° bis 30°. Die anschließend tangential entlang der Abscheidefläche geführte Gemischströmung wird dann im Wesentlichen durch Reibungseffekte und eine Aufweitung des Strömungsquerschnitts abgebremst, so dass die Flüssigkeit zumindest anteilig aus der Gemischströmung abgeschieden wird. Je stärker die Gemischströmung dabei abgebremst wird, desto mehr und desto größere Flüssigkeitströpfchen werden mittels Schwerkraft abgeschieden. Die Reibungseffekte und Aufweitung des Strömungsquerschnitts können durch eine Wegstrecke, die die Gemischströmung entlang der Abscheidefläche geführt wird, mit bestimmt werden. Beispielsweise ergibt sich gemäß einer vergleichsweise längeren Wegstrecke auch eine höhere Abbremsung unter ansonsten vergleichbaren Bedingungen. Durch die tangentiale Führung der Gemischströmung entlang der Abscheidefläche wird zudem der Anteil der Sekundärzerstäubung verringert. Insbesondere wird der Anteil der Sekundärzerstäubung dadurch verringert, dass die tangentiale Führung der Gemischströmung derart gewählt wird, dass Staudrücke, wie sie beispielsweise durch Strömungswiderstände und Verwirbelungen bzw. Turbulenzen auftreten können, gering gehalten oder weitestgehend vermieden werden können.

Durch die Erhöhung der Anzahl der an der Abscheidefläche bereits in einen Flüssigkeitssumpf, wie einen Ölsumpf, abgeschiedenen Flüssigkeits- bzw. Öltröpfchen sowie die Verringerung der Sekundärzerstäubung kann die Effizienz des Kompressorsystems sowie die Standzeit eines nachgelagerten weiteren Flüssigkeitsabscheiders, wie eines Feinabscheiders, erhöht werden. Da die Flüssigkeitsabscheidung an der Abscheidefläche des Grobabscheiders nun nicht mehr nur, wie bei einer Prallplatte, maßgeblich durch den Auftreffwinkel und die Auftreffgeschwindigkeit, sondern auch durch die Führung entlang der Abscheidefläche mit damit einhergehenden Reibungs- und Abbremsungseffekten erfolgt, ergeben sich mehr Gestaltungsmöglichkeiten für den Grobabscheider.

Als Flüssigkeit können Öl oder ölhaltige Flüssigkeiten zur Kühlung und/oder Schmierung eines Kompressorsystems eingesetzt werden. Alternativ können aber auch andere Flüssigkeiten oder Flüssigkeitsgemische eingesetzt werden, die eine Kühlung und/oder Schmierung im Rahmen vorgegebener Spezifikationen ermöglichen. Im Folgenden werden der Begriff "Öl" und daraus gebildete Begrifflichkeiten auch synonym für den Begriff "Flüssigkeit" verwendet. Demnach umfasst der Begriff "Öl" auch Ölersatzstoffe oder anderweitige Kühl- und/oder Schmierflüssigkeiten zur Anwendung in Kompressorsystemen.

Zudem ist die der Gemischzuführung zugewandte Abscheidefläche des Grobabscheiders zumindest in einem durch die Gemischströmung zu durchströmenden Querschnittsabschnitt im Wesentlichen konkav gekrümmt ausgebildet und die Gemischzuführung ist derart angeordnet, dass die Gemischströmung zumindest abschnittsweise im Wesentlichen entlang der konkaven Krümmung geführt wird.

Der Radius der konkaven Krümmung kann konstant oder auch veränderlich sein. Die Gemischzuführung ist der konkaven Krümmung zugewandt, so dass die Gemischströmung über die konkave Krümmung führbar ist und somit gleichsam bogenförmig verläuft. Dies unterstützt die tangentiale Führung der Gemischströmung entlang der Abscheidefläche, bremst aber auch die Gemischströmung weiter ab. Der durch die Gemischströmung zu durchströmende Querschnittsabschnitts bildet somit die Strömungsbahn der Gemischströmung nach.

Darüber hinaus ist die Abscheidefläche des Grobabscheiders parabolisch oder kuppelförmig, insbesondere in Form einer sich zur Kuppelspitze kegelig verjüngenden Kuppel, ausgebildet und die Gemischzuführung derart angeordnet, dass die Gemischströmung zumindest von einer Seite der Abscheidefläche über eine parabolische Richtungsumkehr bzw. einen Kuppelbogen auf die andere Seite der Abscheidefläche geführt wird.

Wenn der Grobabscheider beispielsweise als Kegel mit gerundeter Kuppelspitze als Kuppelbogen ausgebildet ist, der auf der dem Kuppelspitze gegenüberliegenden Seite offen ist, kann die Gemischzuführung in diesem Öffnungsbereich des Kegels angeordnet sein. Der Kuppelbogen kann aber auch alternativ zur Kuppelspitze durch einen anderen konkav gekrümmten Abschnitt des Grobabscheiders ausgebildet werden. Die Abscheidefläche wird durch die Innenseite des Kegels ausgebildet. Der Gemischzuführungsauslass wird dann zum Beispiel derart ausgerichtet, dass das Luft-Flüssigkeitsgemisch tangential entlang einer in Richtung der Symmetrieachse des Kegels weisenden Kegelseite zum Kuppelbogen und anschließend von dem Kuppelbogen aus entlang einer gegenüberliegenden Kegelseite wieder in Richtung der Kegelöffnung geströmt wird. Der durch die Gemischströmung zu durchströmende Querschnittsabschnitt kann demnach ein Querschnittsabschnitt des Kegelquerschnitts durch den Kuppelbogen und parallel zur Symmetrieachse des Kegels sein. Allgemein ist der durch die Gemischströmung zu durchströmende Querschnittsabschnitt ein Querschnittsabschnitt des Kuppelbogens der eine Krümmung des Kuppelbogens aufweist. Die kegelförmige Ausgestaltung der Abscheidefläche kann dabei auch von einem rotationssymmetrischen Kegel abweichen. Die vorstehende Beschreibung ist aber auch auf eine solche Ausgestaltung übertragbar, wobei die Symmetrieachse in diesem Fall durch eine Längsachse zu ersetzen wäre, die sich von der Öffnungsseite des kegeligen Körpers zum Kuppelbogen bzw. der Kuppelspitze erstreckt. In vergleichbarer Weise kann die Abscheidefläche des Grobabscheiders auch eine andere konkave Krümmungsform aufweisen. Bei einer parabolischen Ausbildung der Abscheidefläche wird die Gemischströmung zumindest über eine Krümmung der parabolischen Abscheidefläche geführt, die einen Umkehrpunkt für die Strömungsrichtung der Gemischströmung aufweist. Dieser Abschnitt entspricht einer parabolischen Richtungsumkehr.

In einer Ausgestaltung ist der Querschnitt des der Abscheidefläche zugewandten Gemischzuführungsauslasses kleiner oder gleich, insbesondere kleiner oder gleich der Hälfte, bevorzugt kleiner oder gleich einem Drittel, einer Austrittsfläche der Gemischströmung aus dem Grobabscheider.

Eine kleinere Ausgestaltung des Gemischführungsauslasses im Verhältnis zur Austrittsfläche der Gemischströmung unterstützt die Aufweitung des Strömungsquerschnitts der Gemischströmung. Entsprechend können höhere Abbremsungseffeekte und damit höhere Abscheideraten erzielbar sein. Besonders vorteilhaft ist dabei ein Verhältnis der Querschnittsfläche des Gemischführungsauslasses zur Austrittsfläche der Gemischströmung aus dem Grobabscheider von 1:3 oder kleiner. Die Austrittsfläche der Gemischströmung aus dem Grobabscheider korrespondiert dabei zu einer Öffnungsfläche des Grobabscheiders, die für den Austritt der Gemischströmung aus dem Grobabscheider vorgesehen ist. Mit anderen Worten ist der Strömungsquerschnitt der Gemischströmung bei Eintritt in den Grobabscheider insbesondere kleiner als die strömungstechnisch relevante Austrittsfläche für die Gemischströmung bei Austritt der Gemischströmung aus dem Grobabscheider.

In einer Ausgestaltung ist die Gemischzuführung positionsfest mit dem Grobabscheider verbunden oder verbindbar.

Demnach kann der Gemischzuführungsauslass in einer positionsfesten Beziehung zur Abscheidefläche angeordnet sein, so dass das Strömungsverhalten der Gemischströmung entlang der Abscheidefläche in geometrischer Hinsicht lediglich den Toleranzen der Verbindung der Gemischzuführung mit dem Grobabscheider unterliegt. Gegenüber einer separaten Montage der Gemischzuführung und des Grobabscheiders, beispielsweise an jeweiligen Gehäuseabschnitten eines Kompressorsystems, weist die positionsfeste Verbindung der Gemischzuführung und des Grobabscheiders somit eine geringere Schwankungsbreite der Relativposition und somit eine höhere Reproduzierbarkeit der Abscheideleistung auf. Insbesondere werden aber auch eine Wiedereinsetzung der Gemischzuführung mit dem Grobabscheider und/oder ein Ersatz einer solchen Kombination hierdurch erleichtert, da aufwändige Justagevorgänge entfallen oder zumindest außerhalb eines jeweiligen Gehäuseabschnitts vorgenommen werden können.

Gemäß einer Weiterbildung weist die Verbindung der Gemischzuführung mit dem Grobabscheider Verbindungsmittel, insbesondere zumindest einen Verbindungsteg, vorzugsweise drei, wobei der Verbindungssteg bzw. die Verbindungsstege weiter vorzugsweise verformbar ausgebildet sind, auf.

Über die Verbindungsmittel kann die Gemischzuführung in positionsfester Beziehung zum Grobabscheider gehalten werden. Beispielsweise kann ein Verbindungssteg als Verbindungsmittel ausgebildet sein, um den Gemischzuführungsauslass in einem vorbestimmten Abstand und Winkel positionsfest in Bezug auf die Abscheidefläche anzuordnen. Der Verbindungssteg ist somit sowohl mit der Gemischzuführung als auch dem Grobabscheider verbunden oder verbindbar. Die Verwendung von mehreren Verbindungsstegen, beispielsweise drei Verbindungsstegen, bevorzugt in einem jeweiligen Abstand von etwa 120° um die Gemischzuführung bzw. den Gemischzuführungsauslass, kann zudem die Stabilität der positionsfesten Verbindung erhöhen. Zum Ausgleich von Toleranzen oder zur Anpassung des Auftreffwinkels kann der zumindest eine Verbindungssteg auch verformbar ausgebildet sein. Die Verformung erfolgt dann beispielsweise plastisch, kann aber auch elastisch erfolgen, wenn die elastische Verformung arretierbar ist.

Alternativ zur Verwendung von Verbindungsstegen, kann die Gemischzuführung auch anderweitig positionsfest über Verbindungsmittel an dem Grobscheider verbunden sein. Beispielsweise kann die Gemischzuführung in eine durch den Grobabscheider ausgebildete Gemischzuführungshalterung eingeschraubt werden.

Insbesondere ist die Relativposition der Gemischzuführung und des Grobabscheiders über eine Anpassvorrichtung anpassbar.

Beispielsweise kann der zumindest eine Verbindungssteg alternativ oder ergänzend zu einer Verformbarkeit auch teleskopartig in seiner Länge veränderbar sein. Der Verbindungssteg selbst weist dann die entsprechende Anpassvorrichtung auf. Die Gemischzuführung und/oder der Grobabscheider können aber auch eine Befestigungsvorrichtung für den zumindest einen Verbindungssteg aufweisen, so dass der Verbindungssteg in unterschiedlichen Längenabschnitten an der Gemischzuführung und/oder dem Grobabscheider befestigbar ist. **In** Bezug auf das genannte Beispiel des Einschraubens der Gemischzuführung in eine durch den Grobabscheider ausgebildete Gemischzuführungshalterung kann die Anpassungsvorrichtung beispielsweise auch über das Gewindezusammenspiel der Gemischzuführung und der Gemischzuführungshalterung einstellbar eingeschraubt werden.

Über die Anpassvorrichtung können toleranzbedingte Abweichungen von einer vorbestimmten Relativposition der Gemischzuführung gegenüber dem Grobabscheider korrigiert oder auch eine gänzlich andere Relativposition, beispielweise für ein gezielt geändertes Strömungsverhalten der Gemischströmung, einstellbar sein.

Die Anpassungsvorrichtung kann derart konfiguriert sein, dass sie über eine Steuerungsvorrichtung angesteuert werden kann, um eine Relativposition gesteuert anzupassen. Eine Positionsänderung kann beispielsweise an eine Überwachungseinrichtung gekoppelt sein, die eine Abweichung von einer vorbestimmten Relativposition detektiert. Eine Abweichung kann direkt über eine Positionsbestimmung und/oder auch indirekt über eine Strömungsmessung erfassbar sein. Alternativ oder ergänzend kann die Steuerungsvorrichtung die Relativposition auch gemäß einem Betriebsmodus des Kompressors, einer Auftreffgeschwindigkeit des Luft-Flüssigkeitsgemisches auf die Abscheidefläche und/oder einem Zustand des Feinabscheiders ansteuern. Beispielsweise kann bei geringeren Auftreffgeschwindigkeiten des Luft-Flüssigkeitgemisches auf die Abscheidefläche ein größerer Auftreffwinkel eingestellt werden. Das Risiko einer Sekundärzerstäubung ist bei vergleichsweise niedrigen Auftreffgeschwindigkeiten geringer, so dass die Abscheidefläche somit auch anteilig als Prallplatte nutzbar ist.

In einer Ausgestaltung ist die Verbindung der Gemischzuführung mit dem Grobabscheider lösbar ausgebildet.

Die Gemischzuführung oder der Grobabscheider können demnach unabhängig voneinander ausgetauscht und danach wieder positionsfest miteinander verbunden werden.

Alternativ sind die Gemischzuführung und der Grobabscheider integral ausgebildet.

Beispielsweise können die Gemischzuführung und der Grobabscheider monolithisch oder unlösbar miteinander verbunden sein. Durch eine starre Ausgestaltung der integralen Bauweise ist die positionsfeste Verbindung zwischen Gemischzuführung und Grobabscheider in der üblichen Einsatzumgebung vergleichsweise unempfindlich gegen Veränderungen. Die integrale Bauweise kann aber weiterhin alternativ zu einer starren Ausführung zumindest abschnittsweise verformbare Elemente aufweisen, durch die die Relativposition einstellbar sein kann. Beispielsweise kann der zumindest eine Verbindungssteg einen Schwanenhals- oder Flexarmabschnitt als zumindest abschnittsweise verformbares Element aufweisen, über den eine reversible Änderung der Relativposition vorgenommen werden kann. Durch die Materialauswahl und/oder Dimensionierung des zumindest einen Verbindungsstegs oder eines Bereichs davon kann dieser alternativ oder ergänzend zumindest abschnittsweise verformt werden. Gemäß der vorgenommenen Verformung ist die Relativposition zwischen Gemischzuführung und Grobabscheider und somit der Auftreffwinkel der Gemischströmung auf die Abscheidefläche einstellbar.

In einer Ausgestaltung bildet die Abscheidefläche des Grobabscheiders einen parabolischen, zylindrischen oder kegeligen Körper mit zumindest einer offenen ersten Stirnseite, insbesondere mit einer geschlossenen zweiten Stirnseite des Zylinders oder einem der offenen ersten Stirnseite gegenüberliegenden geschlossenen Endabschnitt des parabolischen oder kegeligen Körpers, aus und die Gemischzuführung ist derart angeordnet, dass die Gemischströmung in Umfangsrichtung des parabolischen, zylindrischen oder kegeligen Körpers tangential entlang der parabolischen, zylindrischen oder kegeligen Abscheidefläche in Richtung der offenen ersten Stirnseite geführt wird.

Bei einem parabolischen oder kegeligen Körper ist die offene erste Stirnseite insbesondere die gegenüber einem verjüngten Abschnitt aufgeweitete Stirnseite. Der parabolische, zylindrische oder kegelförmige Körper als konkav gekrümmter Körper weist eine Längsachse auf, die von der jeweils durch den Körper gebildeten konkaven Krümmung umgeben ist. Im Fall eines rotationssymmetrischen Zylinders oder Kegels ist demnach die Längsachse die Symmetrieachse. Die Gemischzuführung bzw. der Gemischzuführungsauslass ist derart angeordnet, dass das Luft-Flüssigkeitsgemisch in Richtung der offenen ersten Stirnseite weisend auf die Abscheidefläche auftrifft und durch den Kuppelbogen und parallel zur Symmetrieachse des Kegels sein. Allgemein ist der durch die Gemischströmung zu durchströmende Querschnittsabschnitt ein Querschnittsabschnitt des Kuppelbogens der eine Krümmung des Kuppelbogens aufweist. Die kegelförmige Ausgestaltung der Abscheidefläche kann dabei auch von einem rotationssymmetrischen Kegel abweichen. Die vorstehende Beschreibung ist aber auch auf eine solche Ausgestaltung übertragbar, wobei die Symmetrieachse in diesem Fall durch eine Längsachse zu ersetzen wäre, die sich von der Öffnungsseite des kegeligen Körpers zum Kuppelbogen bzw. der Kuppelspitze erstreckt. In vergleichbarer Weise kann die Abscheidefläche des Grobabscheiders auch eine andere konkave Krümmungsform aufweisen. Bei einer parabolischen Ausbildung der Abscheidefläche wird die Gemischströmung zumindest über eine Krümmung der parabolischen Abscheidefläche geführt, die einen Umkehrpunkt für die Strömungsrichtung der Gemischströmung aufweist. Dieser Abschnitt entspricht einer parabolischen Richtungsumkehr.

Alternativ bildet die Abscheidefläche des Grobabscheiders einen parabolischen, zylindrischen oder kegeligen Körper mit zumindest einer offenen ersten Stirnseite, insbesondere mit einer geschlossenen zweiten Stirnseite des Zylinders oder einem der offenen ersten Stirnseite gegenüberliegenden geschlossenen Endabschnitt des parabolischen oder kegeligen Körpers, aus und die Gemischzuführung ist derart angeordnet, dass die Gemischströmung in Umfangsrichtung des parabolischen, zylindrischen oder kegeligen Körpers tangential entlang der parabolischen, zylindrischen oder kegeligen Abscheidefläche in Richtung der offenen ersten Stirnseite geführt wird.

Bei einem parabolischen oder kegeligen Körper ist die offene erste Stirnseite insbesondere die gegenüber einem verjüngten Abschnitt aufgeweitete Stirnseite. Der parabolische, zylindrische oder kegelförmige Körper als konkav gekrümmter Körper weist eine Längsachse auf, die von der jeweils durch den Körper gebildeten konkaven Krümmung umgeben ist. Im Fall eines rotationssymmetrischen Zylinders oder Kegels ist demnach die Längsachse die Symmetrieachse. Die Gemischzuführung bzw. der Gemischzuführungsauslass ist derart angeordnet, dass das Luft-Flüssigkeitsgemisch in Richtung der offenen ersten Stirnseite weisend auf die Abscheidefläche auftrifft und dann tangential in Umfangsrichtung entlang der Abscheidefläche in Richtung der offenen ersten Stirnseite geführt wird.

Die Gemischströmung kann beispielsweise bei einem zylindrischen Körper entlang der Zylinderinnenfläche als Abscheidefläche spiralförmig in Richtung der offenen ersten Stirnseite geführt werden. Je nach Neigungswinkel des Gemischzuführungsauslasses und somit des Auftreffwinkels des Luft-Flüssigkeitsgemisches in Richtung der offenen ersten Stirnseite kann die tangentiale Führungsstrecke der Gemischströmung und/oder die Anzahl der Umläufe der Gemischströmung um die Längsachse des konkav gekrümmten Körpers eingestellt werden. Über den Neigungswinkel kann auch das Risiko einer Überlagerung der Gemischströmung in Richtung der Längsachse verringert werden, um Verwirbelungen zu vermeiden. Der jeweils von der Gemischströmung zu durchströmende Querschnittsabschnitt ist dabei ein Querschnittsabschnitt in einer Ebene, die die Längsachse des konkav gekrümmten Körpers im jeweiligen Neigungswinkel der Gemischströmung schneidet. Bei mehreren Umläufen um die Längsachse folgen mehrere zu durchströmende Querschnittsabschnitte in Richtung der Längsachse aufeinander.

Sofern die zweite Stirnseite des Zylinders oder der der offenen ersten Stirnseite gegenüberliegende geschlossene Endabschnitt des parabolischen oder kegeligen Körpers geschlossen ist, kann sichergestellt werden, dass das Luft-Flüssigkeitgemisches bzw. ein Teil der Gemischströmung nicht durch die zweite Stirnseite des Zylinders oder durch den der offenen ersten Stirnseite gegenüberliegenden geschlossenen Endabschnitt des parabolischen oder kegeligen Körpers entweicht. Die Gemischströmung wird somit kontrolliert aus der offenen ersten Stirnseite herausgeführt.

Insbesondere ist die Abscheidefläche derart gekrümmt, dass die Gemischströmung ausgehend von ihrer Strömungsrichtung bei Austritt aus der Gemischzuführung bis zum Austritt aus dem Grobabscheider um zumindest 90°, insbesondere 120°, bevorzugt 150°, weiter bevorzugt 170°, umlenkbar ist.

Die konkave Krümmung bzw. eine der vorstehend hierzu beschriebenen Ausgestaltung weist somit eine Abscheidefläche auf, die in Strömungsrichtung der Gemischströmung zumindest über die Wegstrecke der Gemischströmung um zumindest 90°, insbesondere 120°, bevorzugt 150°, weiter bevorzugt 170°, gekrümmt ist. Durch die dadurch erzielbare Umlenkung der Gemischströmung kann ein Druckverlust erzeugt werden, der wiederum die Gemischströmung abbremst. Der Abbremsungseffekt ermöglicht wiederum eine Erhöhung der Abscheiderate.

In einer Ausgestaltung ist die Abscheidefläche zumindest teilweise profiliert ausgebildet und/oder weist eine reibungserhöhende Oberfläche auf.

Der Begriff der reibungserhöhenden Oberfläche bezieht sich dabei auf eine Oberfläche, die eine beispielsweise im Vergleich zu einer polierten Oberfläche höhere Reibung bewirkt. Da die Flüssigkeitsabscheidung aus der Gemischströmung durch die tangentiale Strömung entlang der Abscheidefläche auf Reibungs- und Abbremseffekten beruht, unterstützt eine zumindest teilweise reibungserhöhende Oberfläche solche Effekte. Der Reibungskoeffizient kann beispielsweise durch eine erhöhte Rauigkeit eingestellt werden. Alternativ oder ergänzend können entsprechende Beschichtungen auf der Abscheidefläche vorgesehen werden bzw. diese ausbilden. Alternativ oder ergänzend kann die Abscheideoberfläche auch zumindest teilweise profiliert sein. Die Profilierung kann in Form einer Oberflächenstrukturierung gleichermaßen zur Erhöhung der Reibung beitragen. Alternativ oder ergänzend kann eine Profilierung, beispielsweise in Form kleiner Vertiefungen, die Gemischströmung anteilig in den Vertiefungen zur Abscheidung der Flüssigkeit aus der Gemischströmung auffangen bzw. weiter abbremsen. In einer weiteren Alternative oder Ergänzung kann die Profilierung die Gemischströmung in einer vorbestimmten Gemischströmungsbahn führen, um Verwirbelungen zu vermeiden oder zumindest zu verringern und/oder die Gemischströmung auf einen bestimmten Bereich zu begrenzen bzw. gezielt zu führen. Beispielsweise kann der zuvor beschriebene zylindrische Körper eine von der zweiten Stirnseite zur offenen ersten Stirnseite führende spiralförmig um die Längsachse verlaufende Nut aufweisen, in der die Gemischströmung im Wesentlichen tangential geführt wird. Der Abstand der sich gegenüberliegenden Nutwände, d.h. die Nutbreite, kann sich dabei in Richtung der offenen ersten Stirnseite kontinuierlich oder in aufeinanderfolgenden Abschnitten zunehmen vergrößern, um durch Aufweitung der Gemischströmung zusätzliche Brems- bzw. Verlangsamungseffekte zu erzeugen.

Ein weiterer Aspekt der vorliegenden Erfindung betrifft einen Grobabscheider für eine zuvor beschriebene Flüssigkeitsabscheidevorrichtung, wobei die Abscheidefläche gemäß wie zur Flüssigkeitsabscheidevorrichtung beschrieben ausgebildet ist, so dass eine Gemischströmung tangential einleitbar und insbesondere durch eine Aufweitung des Strömungsquerschnitts, Umlenkung der Strömungsrichtung und/oder Reibung entlang der Abscheidefläche abbremsbar ist.

Wie zuvor zu den verschiedenen Ausgestaltungsmöglichkeiten der abscheidefläche beschrieben, ist der Grobabscheider derart konfiguirert, dass durch ihn eine tangential eingeführte Gemischströmung durch Reibung, insbesondere in Verbindung mit einer für die Strömung entlang der Abscheidefläche vorbestimmten Wegstrecke, abbremsbar ist. Eine Abbremsung kann zudem durch entsprechende Oberflächeneigenschaften der Abscheidefläche, eine Aufweitung des Strömungsquerschnitts gemäß dem Verhältnis des Strömungsquerschnitts der Gemischströmung bei Eintritt in den Grobabscheider zu ihrem Strömungsquerschnitt bei ihrem Austritt aus dem Grobabscheider und/oder gemäß einer Umlenkung der Strömungsrichtung weiter unterstützt werden. Dadurch können nicht nur größere Tropfen zur Abscheidung gebildet, sondern auch eine Sekundärzerstäubung verringert werden. Die vorstehenden Ausgestaltungen des Grobabscheiders, wie sie zur Flüssigkeitsabscheidevorrichtung beschrieben wurden, und die jeweils damit verbundenen Vorteile sind demnach auch direkt auf den Grobabscheider an sich übertragbar.

In einem weiteren Aspekt betrifft die vorliegende Erfindung ein Flüssigkeitsabscheidesystem mit einer zuvor beschriebenen Flüssigkeitsabscheidevorrichtung und/oder einem zuvor beschriebenen Grobabscheider, wobei die Flüssigkeitsabscheidevorrichtung derart in dem Flüssigkeitsabscheidesystem angeordnet ist, dass die Gemischströmung zumindest mit einem vertikalen Strömungsanteil, insbesondere einem in Wirkrichtung der Schwerkraft gerichteten Strömungsanteil, aus dem Grobabscheider austritt und/oder das Flüssigkeitsabscheidesystem einen weiteren Flüssigkeitsabscheider aufweist, der derart angeordnet ist, dass die Gemischströmung dem weiteren Flüssigkeitsabscheider zumindest abschnittsweise in einer Strömungsrichtung entgegen der Schwerkraft zuführbar ist.

Die aus dem Grobabscheider austretende Gemischströmung kann somit zunächst in Richtung des Flüssigkeitssumpfs gerichtet werden, bevor die Gemischströmung entgegen der Schwerkraft in Richtung dem weiteren Flüssigkeitsabscheider zugeführt wird. Die Abscheidefläche des Grobabscheiders ist dabei insbesondere zumindest abschnittsweise in Richtung der Schwerkraft zum Flüssigkeitssumpf hin geöffnet, so dass an der Abscheidefläche abgeschiedene Flüssigkeit aus der Gemischströmung in Richtung der Schwerkraft im Flüssigkeitssumpf aufgefangen werden kann. Bevorzugt ist die Abscheidefläche in Richtung der Schwerkraft zum Flüssigkeitssumpf hin vollständig geöffnet, so dass sich keine Flüssigkeit in einem Bereich der Abscheidefläche sammelt. Die Gemischzuführung kann dabei derart angeordnet sein, dass sie den Flüssigkeitssumpf durchläuft und der Gemischzuführungsauslass in Richtung der Schwerkraft oberhalb eines vorbestimmten maximalen Flüssigkeitssumpfpegels angeordnet ist.

In der vorstehenden alternativen oder ergänzenden Variante ist der weitere Flüssigkeitsabscheider dem Grobabscheider in Strömungsrichtung der Gemischströmung nachgeordnet. Die Gemischzuführung ist demnach derart angeordnet, dass das Luft-Flüssigkeitsgemisch zunächst auf den Grobabscheider trifft und die Gemischströmung dann, nachdem sie tangential entlang der Abscheidefläche geströmt ist, entgegen der Schwerkraft dem weiteren Flüssigkeitsabscheider zuführbar ist. Der Grobabscheider und der weitere Flüssigkeitsabscheider können in einem gemeinsamen Gehäuse bzw. in einer durch das Gehäuse gebildeten Gehäusekammer angeordnet sein. Die Gemischströmung kann dann nach Verlassen des Grobabscheiders entgegen der Schwerkraft im Gehäuse nach oben zu dem dort befindlichen weiteren Flüssigkeitsabscheider steigen. In einer Alternative kann sich dieser in Schwerkraftrichtung aber auch auf gleicher Höhe oder unterhalb des Austritts der Gemischströmung aus dem Grobabscheider befinden. Das Flüssigkeitsabscheidesystem weist in diesem Fall eine Gemischströmungsführung auf, die bedingt, dass die Gemischströmung zur Zuführung zum weiteren Flüssigkeitsabscheider zumindest abschnittsweise entgegen der Schwerkraft geströmt ist. Die Gemischströmungsführung kann eine Trennwand sein, wobei der Grobabscheider auf einer Seite der Trennwand und der weitere Flüssigkeitsabscheider auf einer anderen Seite der Trennwand angeordnet ist. Die Trennwand weist einen Durchbruch zur Durchleitung der Gemischströmung auf, der in Richtung der Schwerkraft oberhalb des Austritts der Gemischströmung angeordnet ist. Der weitere Flüssigkeitsabscheider kann aber auch in einer von der des Grobabscheiders separaten Gehäusekammer angeordnet sein, wobei die Gemischströmung dem weiteren Flüssigkeitsabscheider über einen Gemischströmungskanal zugeführt wird. Der Gemischströmungskanal weist einen Gemischströmungskanaleinlass auf, in den die Gemischströmung von dem Grobabscheider aus einströmen kann, wobei der Gemischströmungskanaleinlass in Richtung der Schwerkraft oberhalb des Austritts der Gemischströmung aus dem Grobabscheider angeordnet ist. Alternativ oder ergänzend kann der Gemischströmungskanal auch zumindest einen Abschnitt aufweisen, in dem die Gemischströmung entgegen der Schwerkraft geführt wird.

Durch den Austritt der Gemischströmung aus dem Grobabscheider mit zumindest einem vertikalen Strömungsanteil, insbesondere einem in Wirkrichtung der Schwerkraft gerichteten Strömungsanteil, und/oder die Zuführung der Gemischströmung zum weiteren Flüssigkeitsabscheider zumindest abschnittsweise in einer Strömungsrichtung entgegen der Schwerkraft wird eine schwerkraftsbedingte Flüssigkeitsabscheidung unterstützt.

In einer Ausgestaltung weist das Flüssigkeitsabscheidesystem einen Flüssigkeitssumpf auf und der weitere Flüssigkeitsabscheider, insbesondere ein Feinabscheider, ist auf einer dem Flüssigkeitssumpf in Richtung der Schwerkraft entgegengerichteten Seite angeordnet.

Mit anderen Worten ist der weitere Flüssigkeitsabscheider in Richtung der Schwerkraft oberhalb des Flüssigkeitssumpfs angeordnet. Die gemäß dieser Anordnung zum weiteren Flüssigkeitsabscheider entgegen der Schwerkraft aufsteigende Gemischströmung kann somit weiterhin Flüssigkeit in den Flüssigkeitssumpf abscheiden.

In einer Ausgestaltung weist das Flüssigkeitsabscheidesystem ein Gehäuse auf, das die Abscheidefläche des Grobabscheiders ausbildet.

Demnach kann das Gehäuse des Flüssigkeitsabscheidesystems derart gestaltet sein, dass auf ein zusätzliches Element zur Ausbildung des Grobabscheiders verzichtet werden kann. Beispielsweise kann ein Gehäuseabschnitt in einer Richtung parallel zum Flüssigkeitspegel im Flüssigkeitssumpf von dem Gemischzuführungsauslass bis zum weiteren Flüssigkeitsabscheider konkav gekrümmt sein. Wird die Gemischströmung in einem solchen Fall von dem Gemischzuführungsauslass parallel zum Flüssigkeitspegel tangential entlang des konkav gekrümmten Gehäuseabschnitts zum weiteren Flüssigkeitsabscheider geströmt, so kann sich Flüssigkeit aus der Gemischströmung über diese Strecke abscheiden. Hierbei kann es von Vorteil sein, wenn die durch den Gehäuseabschnitt ausgebildete Abscheidefläche in Richtung des Flüssigkeitssumpfs geneigt ist. Durch das Gehäuse bzw. den Gehäuseabschnitt kann aber auch jede andere der beschriebenen Abscheideflächen nachgebildet werden.

Insbesondere ist die Gemischzuführung derart ausgerichtet, dass die Gemischströmung entgegen der Schwerkraft gerichtet ist.

Beispielsweise kann in der vorstehenden Konfiguration des Flüssigkeitsabscheidesystems mit einem Flüssigkeitssumpf und dem weiteren Flüssigkeitsabscheider, der dem Flüssigkeitssumpf entgegen der Richtung der Schwerkraft gegenüberliegt, die Gehäusewand, die sich vom Flüssigkeitssumpf bis zum weiteren Flüssigkeitsabscheider erstreckt, zylindrisch ausgebildet sein. Die Gemischzuführung kann in einem dem Flüssigkeitssumpf zugewandten Bereich derart angeordnet sein, dass das Luft-Flüssigkeitsgemisch in Richtung der Schwerkraft nach oben geneigt und unter kleinem Auftreffwinkel auf die Gehäusewand als Abscheidefläche auftrifft und die Gemischströmung tangential entlang der zylindrischen Gehäusewand zum weiteren Flüssigkeitsabscheider geführt wird. Mit anderen Worten wird die Gemischströmung über die zylindrische Gehäusewand spiralförmig entgegen der Schwerkraft zum weiteren Flüssigkeitsabscheider geführt.

Im Folgenden wird die Erfindung anhand von Ausführungsbeispielen unter Bezugnahme auf die beigefügten Figuren näher erläutert. Die Figuren zeigen im Einzelnen:
**Figur 1** eine schematische Querschnittsdarstellung eines Flüssigkeitsabscheidesystems gemäß einem exemplarischen Stand der Technik;
**Figur 2** eine schematische Querschnittsdarstellung eines Flüssigkeitsabscheidesystems gemäß einer exemplarischen Ausgestaltung mit einer Flüssigkeitsabscheidevorrichtung gemäß einer ersten exemplarischen, nicht beanspruchten Ausführungsform;
**Figur 3a** eine schematische Querschnittsdarstellung einer Flüssigkeitsabscheidevorrichtung in einer Ebene parallel zu und durch eine Längsachse eines Grobabscheiders gemäß einer zweiten exemplarischen Ausführungsform gemäß der vorliegenden Erfindung;
**Figur 3b** eine schematische Querschnittsdarstellung der
Flüssigkeitsabscheidevorrichtung in einer Ebene senkrecht zur Längsachse gemäß der zweiten exemplarischen Ausführungsform gemäß der vorliegenden Erfindung;
**Figur 4a** eine schematische Querschnittsdarstellung einer Flüssigkeitsabscheidevorrichtung in einer Ebene parallel zu und durch eine Längsachse eines Grobabscheiders gemäß einer dritten exemplarischen, nicht beanspruchten Ausführungsform.
**Figur 4b** eine schematische Querschnittsdarstellung der Flüssigkeitsabscheidevorrichtung in einer Ebene senkrecht zur Längsachse gemäß der dritten exemplarischen, nicht beanspruchten Ausführungsform.
**Figur 5a** eine schematische Querschnittsdarstellung eines Flüssigkeitsabscheidesystems gemäß einer exemplarischen Variante mit einer Flüssigkeitsabscheidevorrichtung gemäß einer vierten exemplarischen, nicht beanspruchten Ausführungsform, und
**Figur 5b** eine schematische Querschnittsdarstellung des Flüssigkeitsabscheidesystems in einer Ebene parallel zu einem Flüssigkeitssumpf gemäß der vierten exemplarischen, nicht beanspruchten Ausführungsform.

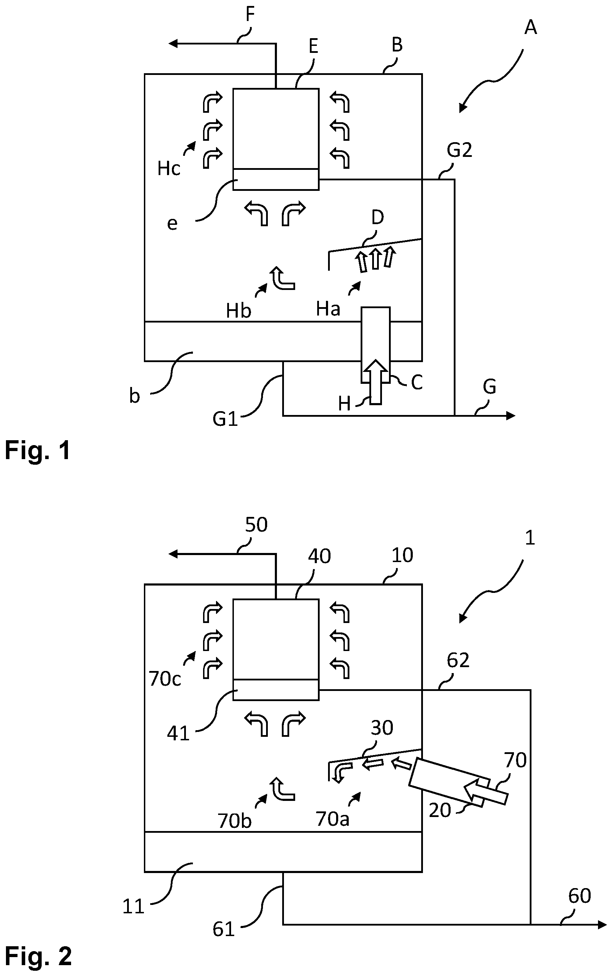

**Figur 1** zeigt eine schematische Querschnittsdarstellung eines Ölabscheidesystems A als Beispiel eines Flüssigkeitsabscheidesystems gemäß einem exemplarischen Stand der Technik. Das Ölabscheidesystem A weist ein Gehäuse B dessen in Richtung der Schwerkraft unterer Teil einen Ölsumpf b ausbildet. Auf einer in Richtung der Schwerkraft gegenüberliegenden Seite des Ölsumpfs b ist ein Feinabscheider in einem in Richtung der Schwerkraft oberen Gehäuseteil im Gehäuse B angeordnet. Der Feinabscheider E weist in einem dem Ölsumpf b zugewandten Bereich einen Feinabscheider-Ölsumpf e auf, um im Feinabscheider E abgeschiedenes Öl zu sammeln. Die verbleibende Luft oder zumindest ein Luft-Öl-Gemisch mit vermindertem Ölanteil wird dann über die Luftableitung F aus dem Feinabscheider E abgeführt. Öl aus dem Ölsumpf b kann über eine Ölsumpfableitung G1 und Öl aus dem Feinabscheider-Ölsumpf e kann über eine Feinabscheider-Ölsumpfableitung G2 aus dem Gehäuse A ausgeleitet werden. Die Ölsumpfableitung G1 und die Feinabscheider-Ölsumpfableitung G2 werden zu einer gemeinsamen Ölableitung G zusammengeführt.

Zudem ist in dem Gehäuse A eine Prallplatte D als Grobabscheider angeordnet, um die Menge des im Luft-ÖI-Gemisch H enthaltenen Öls durch Abscheidung bereits zu verringern, bevor das Luft-Öl-Gemisch H dem Feinabscheider E zugeführt wird. Die Prallplatte D ist von einer Pegelfläche des Ölsumpfs b beabstandet und weist eine dem Ölsumpf b zugewandte Abscheidefläche auf. Das Luft-Öl-Gemisch H wird über einen Druckstutzen C als Gemischzuführung in das Gehäuse A eingeleitet. Der Druckstutzen C ist derart ausgerichtet, dass eine auf die Prallplatte D auftreffende Gemischströmung Ha zur Grobabscheidung in einem Bereich von 90° +/- 30° auf die Abscheidefläche der Prallplatte D auftrifft. Hierzu wird der Druckstutzen C durch den Ölsumpf b geführt und die Auslassöffnung des Druckstutzens C im Wesentlichen parallel zur Prallplatte D bzw. deren Abscheidefläche ausgerichtet. Entsprechend des Austreffwinkels und der Auftreffgeschwindigkeit der Gemischströmung Ha auf die Prallplatte D entstehen unterschiedliche große, insbesondere aber auch viele kleinere Öltropfen. Die größeren Öltropfen tropfen gemäß ihrer Schwerkraft in den Ölsumpf b, während kleinere Tropfen als Sekundärzerstäubung im Druckraum verteilt und mit einer der Prallplatte D nachgelagerten Gemischströmung Hb im Gehäuse A weiter entgegen der Schwerkraft in Richtung des Feinabscheiders E transportiert werden können. Eine dem Feinabscheider E zugeführte Gemischströmung Hc kann somit insbesondere durch die Sekundärzerstäubung noch ausreichende Ölanteile enthalten, die Einfluss auf die Standzeit des Feinfilters E und die Effizienz des Kompressorsystems nehmen.

Zur Verringerung der Sekundärzerstäubung zeigt **Figur 2** eine schematische Querschnittsdarstellung eines Ölabscheidesystems 1 als Beispiel eines Flüssigkeitsabscheidesystems gemäß einer exemplarischen Ausgestaltung mit einer Ölabscheidevorrichtung als Beispiel einer Flüssigkeitsabscheidevorrichtung gemäß einer ersten exemplarischen, nicht beanspruchten Ausführungsform. Die Ausführungsform des Ölabscheidesystems 1 unterscheidet sich von dem Ölabscheidesystem A gemäß dem Stand der Technik durch die Ausbildung der Ölabscheidevorrichtung aus dem Druckstutzen 20 als Gemischzuführung und dem Grobabscheider 30 in einer Anordnung, bei der ein Luft-Öl-Gemisch 70 in einem vergleichsweise kleinen Auftreffwinkel auf die Abscheidefläche des Grobabscheiders 30 auftrifft. Durch den vergleichsweise kleinen Auftreffwinkel, insbesondere in einem Bereich von 0° bis 30°, hier in etwa 20°, prallt eine Gemischströmung 70a nicht wieder von der Abscheidefläche ab, sondern wird tangential an der Abscheidefläche entlang geführt. Über Reibungs- und Bremseffekte wird Öl aus der Gemischströmung 70a abgeschieden und kann in einen der Abscheidefläche gegenüberliegenden Ölsumpf 11 tropfen. Eine Sekundärzerstäubung wird weitestgehend minimiert. Der Druckstutzen 20 wird in der exemplarischen Ausführungsform nicht durch den Ölsumpf 11 geführt, sondern ist an einer vom Ölsumpf 11 ausgehenden Seitenwand eines Gehäuses 10 der Abscheidevorrichtung angeordnet.

Im Übrigen ist das Ölabscheidesystem 1 mit dem Ölabscheidesystem A vergleichbar. Wie zuvor zum Stand der Technik beschrieben umfasst das Ölabscheidesystem 1 das Gehäuse 10, das den Ölsumpf 11 ausbildet. Zudem weist das Gehäuse 10 einen gegenüber dem Ölsumpf 11 angeordneten Feinabscheider 40 mit einem Feinabscheider-Ölsumpf 41 auf. Das Öl aus dem Ölsumpf 11 wird über eine Ölsumpfableitung 61 und das Öl aus dem Feinabscheider-Ölsumpf 41 wird über eine Feinabscheider-Ölsumpfableitung 62 abgeleitet, die zu einer Ölableitung 60 zusammengeführt werden. Nachdem die Gemischströmung 70a tangential entlang der Abscheidefläche geströmt ist, verteilt sich diese als Gemischströmung 70b weiter in dem durch das Gehäuse 10 gebildeten Druckraum und wird als Gemischströmung 70c entgegen der Schwerkraft dem Feinabscheider 40 zugeführt. Die Luft oder zumindest ein Luft-Öl-Gemisch mit mittels dem Feinabscheider 40 verminderten Ölgehalt wird über die Luftableitung 50 aus dem Feinabscheider 40 abgeführt.

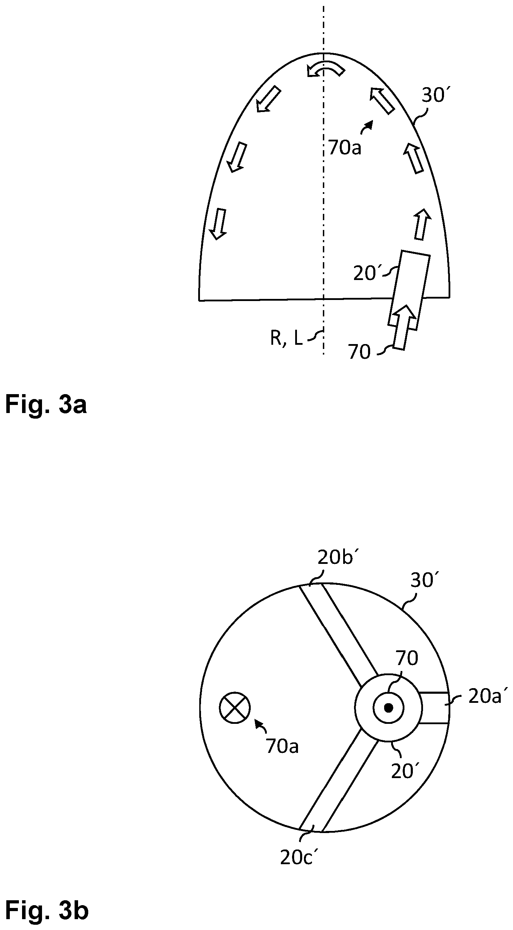

**Figur 3a** zeigt eine schematische Querschnittsdarstellung einer Ölabscheidevorrichtung in einer Ebene parallel zu und durch eine Längsachse L eines Grobabscheiders 30' gemäß einer zweiten exemplarischen Ausführungsform der vorliegenden Erfindung. Die Ölscheidevorrichtung weist einen Druckstutzen 20' und den Grobabscheider 30' auf. Der Grobabscheider 30' ist als parabolischer rotationssymmetrischer Hohlkörper um die Längsachse L bzw. Symmetrieachse R ausgebildet, der sich ausgehend von einer durch den größten Durchmesser gebildeten Öffnung hin zu einer durch den Umkehrpunkt des parabolischen Verlaufs entlang der Symmetrieachse R erstreckt. Mit anderen Worten bildet der Grobabscheider 30' einen kuppelförmigen Körper aus, wobei der Umkehrpunkt des parabolischen Verlaufs einer Kuppelspitze entspricht. Durch die Innenfläche des Grobabscheiders 30' wird somit eine konkav gekrümmte Abscheidefläche ausgebildet. Der Druckstutzen 20' ragt mit einem Gemischzuführungsauslass durch die Öffnung des Grobabscheiders 30' in das durch die Abscheidefläche gebildeten Volumen des Grobabscheiders 30' hinein. In alternativen Ausführungsformen kann der Druckstutzen 20' bzw. der Gemischzuführungsauslass aber auch außerhalb des durch die Abscheidefläche gebildeten Volumens des Grobabscheiders 30' angeordnet sein. Der Gemischzuführungsauslass des Druckstutzens 20' ist auf eine parabolische Seitenfläche des Grobabscheiders 30' gerichtet, so dass das Luft-Öl-Gemisch 70 mit vergleichsweise kleinem Auftreffwinkel zwischen der Abscheidefläche und der Auftreffrichtung des Luft-Öl-Gemischs 70 in Auftreffrichtung gesehen, hier in etwa 20°, auf die Abscheidefläche auftrifft. Die Gemischströmung verläuft tangential entlang der Abscheidefläche in Richtung der Symmetrieachse R bzw. Längsachse L des Grobabscheiders 30' in Richtung der Kuppelspitze bzw. des Umkehrpunkts des parabolischen Verlaufs und wird dann auf der gegenüberliegenden Abscheidungsfläche wieder in Richtung der Öffnung gelenkt, um dann wieder aus dem Grobabscheider 30' auszutreten und als Gemischströmung 70b weitergeleitet zu werden.

In Bezug auf das in **Figur 2** gezeigte Ölabscheidesystem 1 kann die Ölabscheidevorrichtung gemäß **Figur 3a** alternativ oder ergänzend zum Druckstutzen 20 und zum Grobabscheider 30 derart eingesetzt werden, dass die Öffnung des Grobabscheiders 30' in Richtung des Ölsumpfs 11 weist. An der Abscheidefläche abgeschiedenes Öl kann somit möglichst immer in den Ölsumpf 11 tropfen. Der Druckstutzen 20' weist in diesem Fall im Wesentlichen in Richtung des Ölsumpfs 11, so dass der Druckstutzen 20' auch durch diesen hindurchgeführt werden kann.

Der Druckstutzen 20' kann Teil eines Gehäuseblocks eines ölgeschmierten Schraubenkompressors (nicht gezeigt) sein, der das verdichtete Luft-Öl-Gemisch 70 aus dem Schraubenkompressor ausleitet. Der Grobabscheider 30' ist in diesem Fall ebenfalls schon Teil des Gehäuseblocks oder entsprechend mit dem Druckstutzen 20' positionsfest verbunden oder in alternativen Ausführungsformen positionsfest verbindbar.

Ergänzend zu **Figur 3a** zeigt **Figur 3b** eine schematische Querschnittsdarstellung der Ölabscheidevorrichtung in einer Ebene senkrecht zur Längsachse L bzw. Symmetrieachse R gemäß der zweiten exemplarischen Ausführungsform der vorliegenden Erfindung. In anderen Worten stellt **Figur 3b** eine Querschnittsansicht gemäß einer Draufsicht auf die Ölabscheidevorrichtung der **Figur 3a** dar. Die Blickrichtung erfolgt von Seiten der Kuppelspitze, also in Richtung der Öffnung des Grobabscheiders 30'. Die Einleitung des Luft-Öl-Gemischs 70 in den Grobabscheider 30' wird durch den eingekreisten Punkt repräsentiert, der einer Strömungsrichtung aus der Zeichnungsebene heraus entspricht. Das Luft-Öl-Gemisch ist dabei auf die Abscheidefläche gerichtet. Die auf der anderen Seite der Abscheidefläche wieder in Richtung der Öffnung strömende Gemischströmung 70a wird entsprechend durch ein eingekreistes Kreuz repräsentiert, also entsprechend einer Strömungsrichtung in die Zeichenebene hinein.

Der Druckstutzen 20' wird hier durch drei Verbindungsstege 20a', 20b' und 20c' als Verbindungsmittel in positionsfester Verbindung zum Grobabscheider 30' gehalten. In alternativen Ausführungsformen kann der Druckstutzen 20' auch durch mehr oder weniger als drei Verbindungsstege oder auch andere Verbindungsmittel mit dem Grobabscheider 30' verbunden sein. Der Druckstutzen 20', die Verbindungsstege 20a-c' und der Grobabscheider 30' sind in der gezeigten Ausführungsform integral miteinander als Gussbauteil ausgebildet. Alternativ können Schweißkonstruktionen oder anderweitige Integralbauweisen Anwendung finden. In weiteren alternativen Ausführungsformen können die jeweiligen Verbindungsstege 20a-c' auch jeweils mit dem Grobabscheider 30' und Druckstutzen 20' verschraubt oder anderweitig lösbar verbunden werden, um die Relativposition zwischen Druckstutzen 20' und Grobabscheider 30' einstellen bzw. anpassen und/oder einen Austausch einzelner Komponenten vornehmen zu können.

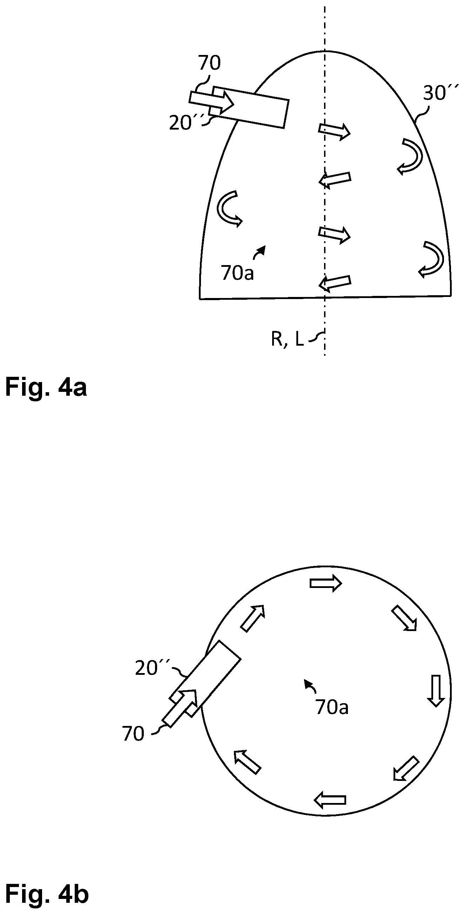

**Figur 4a** zeigt eine schematische Querschnittsdarstellung einer Ölabscheidevorrichtung in einer Ebene parallel zu und durch eine Längsachse eines Grobabscheiders 30" gemäß einer dritten exemplarischen Ausführungsform der vorliegenden Erfindung. Die dritte Ausführungsform der Ölabscheidevorrichtung unterscheidet sich von der zweiten Ausführungsform der Ölabscheidevorrichtung durch die Anordnung eines Druckstutzens 20" relativ zu der durch den Grobabscheider 30" ausgebildeten Abscheidefläche. Wie in der zweiten Ausführungsform der Ölabscheidevorrichtung ist der Grobabscheider 30" als parabolischer rotationssymmetrischer Hohlkörper um die Längsachse L bzw. Symmetrieachse R ausgebildet, der sich ausgehend von einer durch den größten Durchmesser gebildeten Öffnung hin zu einer durch den Umkehrpunkt des parabolischen Verlaufs entlang der Symmetrieachse erstreckt. Mit anderen Worten bildet der Grobabscheider 30" auch hier einen kuppelförmigen Körper aus, wobei der Umkehrpunkt des parabolischen Verlaufs einer Kuppelspitze entspricht. Durch die Innenfläche des Grobabscheiders 30" wird somit eine konkav gekrümmte Abscheidefläche ausgebildet. Der Druckstutzen 20" ist in einem der Kuppelspitze zugewandten Bereich des Grobabscheiders 30" angeordnet und der Gemischzuführungsauslass ist in Richtung der Öffnung des Grobabscheiders 30" geneigt. Der Gemischzuführungsauslass ist zudem in Richtung der Abscheidefläche gerichtet, um das Luft-Öl-Gemisch unter einem Auftreffwinkel von etwa 20° in Umlaufrichtung des Durchmessers des Grobabscheiders 30" auf die Abscheidefläche zu leiten. Die Gemischströmung 70a wird folglich tangential in Umlaufrichtung spiralförmig in Richtung der Öffnung des Grobabscheiders 30" geführt.

**Figur 4b** zeigt hierzu ergänzend eine schematische Querschnittsdarstellung der Ölabscheidevorrichtung in einer Ebene senkrecht zur Längsachse L bzw. Symmetrieachse R gemäß der dritten exemplarischen Ausführungsform der vorliegenden Erfindung. Die Ansicht verdeutlicht nochmals die von der Gemischströmung 70a durchlaufenen Kreisbahnen, die sich spiralförmig in Richtung der Öffnung des Grobabscheiders 30" schrauben.

In Bezug auf das in **Figur 2** gezeigte Ölabscheidesystem 1 kann die Ölabscheidevorrichtung gemäß **Figur 4a** und **Figur 4b** alternativ oder ergänzend zum Druckstutzen 20 und zum Grobabscheider 30 derart eingesetzt werden, dass die Öffnung des Grobabscheiders 30" in Richtung des Ölsumpfs 11 weist. An der Abscheidefläche abgeschiedenes Öl kann somit möglichst immer in den Ölsumpf 11 tropfen. In Bezug auf die in **Figur 3a** und **Figur 3b** gezeigte zweite Ausführungsform kann zudem durch andere Anordnung des Druckstutzens 20' oder zusätzliche Vorsehung des Druckstutzens 20" die zweite Ausführungsform in die dritte Ausführungsform umgewandelt oder gemäß der dritten Ausführungsform betrieben werden. In einer Variante in der der Druckstutzen 20' entsprechend umpositioniert werden kann, ist der Druckstutzen 20' dann nicht integral mit dem Grobabscheider 30' verbunden, kann aber dennoch mit dem Grobabscheider 30' positionsfest verbunden werden. In gleicher Weise kann die Ölabscheidevorrichtung gemäß der dritten Ausführungsform auch in eine Ölabscheidevorrichtung der zweiten Ausführungsform umgerüstet oder entsprechend betrieben werden. Sofern zwei Druckstutzen 20' und 20" in jeweiliger Anordnung vorgesehen sind, kann beispielsweise das Luft-Öl-Gemisch 70 über den Druckstutzen 20' und/oder den Druckstutzen 20" eingeleitet werden. Eine gleichzeitige Einleitung über beide Druckstutzen 20' und 20" kann unter anderem von einer Strömungsgeschwindigkeit und der Wahrscheinlichkeit von Verwirbelungen und deren Auswirkungen abhängig sein.

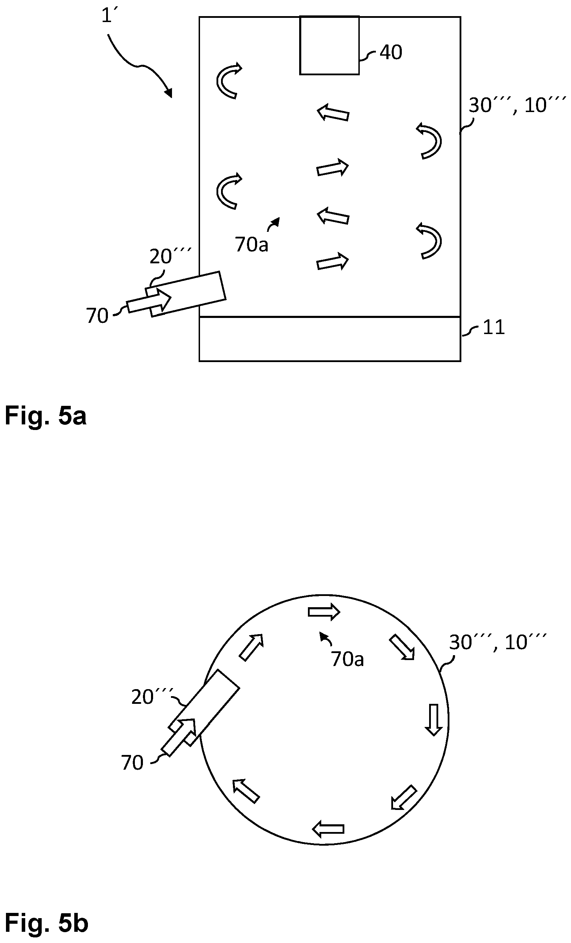

**Figur 5a** zeigt eine schematische Querschnittsdarstellung eines Ölabscheidesystems 1 ' gemäß einer exemplarischen Variante mit einer Ölabscheidevorrichtung gemäß einer vierten exemplarischen Ausführungsform der vorliegenden Erfindung. Das Ölabscheidesystem 1' unterscheidet sich von dem Ölabscheidesystem 1 im Wesentlichen dadurch, dass ein Grobabscheider 30‴ nicht innerhalb eines Gehäuses 10‴ des Ölabscheidesystems 1' angeordnet, sondern durch das Gehäuse 10‴ selbst ausgebildet wird. Das Gehäuse 10‴ weist dazu zumindest einen Gehäuseabschnitt als Abscheidefläche auf. In der dargestellten Ausführungsform wird die Abscheidefläche durch die seitlichen Innenflächen des Gehäuses 10‴ gebildet, die sich vom Ölsumpf 11 entgegen der Schwerkraft erstrecken. Der Druckstutzen 20‴ ist hier seitlich in Richtung der Schwerkraft oberhalb des Ölsumpfs 11 angeordnet. Der Gemischzuführungsauslass ist zu einer dem Ölsumpf 11 abgewandten Seite angestellt. Die Gemischströmung 70a wird in dieser Konfiguration tangential in Umlaufrichtung der seitlichen Innenflächen des Gehäuses 10‴ spiralförmig entgegen der Schwerkraft zum Feinabscheider 40 geführt, der in einem dem Ölsumpf 11 gegenüberliegenden, in Richtung der Schwerkraft oberen Gehäusebereich angeordnet ist.

**Figur 5b** zeigt eine schematische Querschnittsdarstellung des Ölabscheidesystems 1 ' in einer Ebene parallel zum Ölsumpf 11 gemäß der vierten exemplarischen Ausführungsform der vorliegenden Erfindung. Mit anderen Worten zeigt **Figur 5b** eine Draufsicht auf das Ölabscheidesystem 1' gemäß **Figur 5a** in Blickrichtung auf den Ölsumpf 11. Die Schnittebene liegt dabei zwischen dem Ölsumpf 11 und dem Feinabscheider 40. Gemäß der vierten Ausführungsform bilden die seitlichen Innenflächen des Gehäuses 10‴ einen Zylinder aus. Die zylindrischen Flächen bilden die Abscheidefläche des hierdurch ausgebildeten Grobabscheiders 30‴. Wie vorstehend beschrieben, ist der Gemischzuführungsauslass leicht in Richtung des Feinabscheiders 40 geneigt, so dass die Gemischströmung 70a ebenfalls in einem Strömungsanteil in Richtung des Feinabscheiders gerichtet ist. Mit anderen Worten liegt jeder der die Gemischströmung 70a repräsentierenden Pfeile ausgehend von dem ersten Pfeil nach dem Druckstutzen 20‴ im Uhrzeigersinn in Richtung der Schwerkraft, also im anwendungsgerechten Gebrauch in einer Höhenrichtung, näher am Feinabscheider 40 als der jeweils vorhergehende Pfeil.

Die Erfindung ist nicht auf die beschriebenen Ausführungsformen beschränkt. Auch wenn in den vorstehend beschriebenen Ausführungsformen eine Ölabscheidevorrichtung, ein Grobabscheider und ein Ölabscheidesystem zur Ölabscheidung beschrieben werden, ist die Flüssigkeitsabscheidevorrichtung, ein entsprechender Grobabscheider und ein Flüssigkeitsabscheidesystem gemäß der vorliegenden Erfindung nicht auf die Verwendung eines Öls oder einer ölhaltigen Flüssigkeit beschränkt. Es können beispielsweise auch andere Flüssigkeiten abgeschieden werden, die im Kompressorsystem alternativ oder ergänzend zur Kühlung und/oder Schmierung eingesetzt werden. Auch kann die Abscheidevorrichtung mehrere Gemischzuführungen und/oder Gemischzuführung mehrere Gemischzuführungsauslässe aufweisen, um mehrere Gemischströmungen wahlweise oder gleichzeitig auf die Abscheidefläche zu strömen.

### BEZUGSZEICHENLISTE

- 1, 1': Ölabscheidesystem (Flüssigkeitsabscheidesystem)
- 10: Gehäuse
- 11: Ölsumpf (Flüssigkeitssumpf)
- 20, 20', 20", 20‴: Druckstutzen (Gemischzuführung)
- 20a', 20b', 20c': Verbindungssteg (Verbindungsmittel)
- 30, 30', 30", 30‴: Grobabscheider
- 40: Feinabscheider (weiterer Flüssigkeitsabscheider)
- 41: Feinabscheider-Ölsumpf (Feinabscheider-Flüssigkeitssumpf)
- 50: Luftableitung
- 60: Ölableitung (Flüssigkeitsableitung)
- 61: Ölsumpfableitung (Flüssigkeitssumpfableitung)
- 62: Feinabscheider-Ölsumpfableitung (Feinabscheider-Flüssigkeitssumpfableitung)
- 70: Luft-Öl-Gemisch (Luft-Flüssigkeitsgemisch)
- 70a: Gemischströmung (Grobabscheider)
- 70b: Gemischströmung (Gehäuse)
- 70c: Gemischströmung (Feinabscheider)
- A: Ölabscheidesystem (Flüssigkeitsabscheidesystem)
- B: Gehäuse
- b: Ölsumpf (Flüssigkeitssumpf)
- C: Druckstutzen (Gemischzuführung)
- D: Prallplatte (Grobabscheider)
- E: Feinabscheider
- e: Feinabscheider-Ölsumpf (Feinabscheider-Flüssigkeitssumpf)
- F: Luftableitung
- G: Ölableitung (Flüssigkeitsableitung)
- G1: Ölsumpfableitung (Flüssigkeitssumpfableitung)
- G2: Feinabscheider-Ölsumpfableitung (Feinabscheider-Flüssigkeitssumpfableitung)
- H: Luft-Öl-Gemisch (Luft-Flüssigkeitsgemisch)
- Ha: Gemischströmung (Grobabscheider)
- Hb: Gemischströmung (Gehäuse)
- Hc: Gemischströmung (Feinabscheider)
- L: Längsachse
- R: Symmetrieachse

## Patentansprüche

1. Flüssigkeitsabscheidevorrichtung für ein Kompressorsystem, aufweisend:
einen Grobabscheider (30, 30', 30", 30‴), der zumindest eine Abscheidefläche aufweist und
zumindest eine Gemischzuführung (20, 20', 20", 20"'), die dazu konfiguriert ist, der Abscheidefläche ein Luft-Flüssigkeitsgemisch (70) zuzuführen,
wobei die Gemischzuführung (20, 20', 20", 20"') mit einem der Abscheidefläche zugewandten Gemischzuführungsauslass ausgebildet ist, der derart im Verhältnis zur Abscheidefläche des Grobabscheiders (30, 30', 30", 30"') angeordnet ist, dass eine auf die Abscheidefläche treffende Gemischströmung (70a) im Wesentlichen tangential über zumindest einen Abschnitt der Abscheidefläche geführt wird,
wobei die Flüssigkeitsabscheidevorrichtung sich dadurch auszeichnet, dass
die der Gemischzuführung (20', 20", 20‴) zugewandte Abscheidefläche des Grobabscheiders (30', 30", 30"') zumindest in einem durch die Gemischströmung (70a) zu durchströmenden Querschnittsabschnitt im Wesentlichen konkav gekrümmt ausgebildet ist und die Gemischzuführung (20', 20", 20‴) derart angeordnet ist, dass die Gemischströmung (70a) zumindest abschnittsweise im Wesentlichen entlang der konkaven Krümmung geführt wird, und
wobei die Abscheidefläche des Grobabscheiders (30') parabolisch oder kuppelförmig ausgebildet und die Gemischzuführung (20') derart angeordnet ist, dass die Gemischströmung (70a) zumindest von einer Seite der Abscheidefläche über eine parabolische Richtungsumkehr bzw. einen Kuppelbogen auf die andere Seite der Abscheidefläche geführt wird.

2. Die Flüssigkeitsabscheidevorrichtung nach Anspruch 1, wobei der Querschnitt des der Abscheidefläche zugewandten Gemischzuführungsauslasses kleiner oder gleich, insbesondere kleiner oder gleich der Hälfte, bevorzugt kleiner oder gleich einem Drittel, einer Austrittsfläche der Gemischströmung (70a) aus dem Grobabscheider (30, 30', 30", 30‴) ist.

3. Die Flüssigkeitsabscheidevorrichtung nach Anspruch 1 oder 2, wobei die Gemischzuführung (20', 20", 20‴) positionsfest mit dem Grobabscheider (30', 30", 30"') verbunden oder verbindbar ist.

4. Die Flüssigkeitsabscheidevorrichtung nach Anspruch 3, wobei die Verbindung der Gemischzuführung (20', 20", 20‴) mit dem Grobabscheider (30', 30", 30"') Verbindungsmittel, insbesondere zumindest einen Verbindungsteg (20a', 20b', 20c'), vorzugsweise drei, wobei der Verbindungssteg bzw. die Verbindungsstege weiter vorzugsweise verformbar ausgebildet sind, aufweist.

5. Die Flüssigkeitsabscheidevorrichtung nach Anspruch 3 oder 4, wobei die Relativposition der Gemischzuführung (20', 20", 20"') und des Grobabscheiders (30', 30", 30‴) über eine Anpassvorrichtung anpassbar ist.

6. Die Flüssigkeitsabscheidevorrichtung nach einem der Ansprüche 3 bis 5, wobei die Verbindung der Gemischzuführung (20', 20", 20‴) mit dem Grobabscheider (30', 30", 30‴) lösbar ausgebildet ist.

7. Die Flüssigkeitsabscheidevorrichtung nach einem der Ansprüche 3 bis 5, wobei die Gemischzuführung (20', 20", 20"') und der Grobabscheider (30', 30", 30"') integral ausgebildet sind.

8. Die Flüssigkeitsabscheidevorrichtung nach einem der vorhergehenden Ansprüche, wobei die Abscheidefläche des Grobabscheiders (30') in Form einer sich zur Kuppelspitze kegelig verjüngenden Kuppel ausgebildet ist.

9. Die Flüssigkeitsabscheidevorrichtung nach einem der vorhergehenden Ansprüche, wobei die Abscheidefläche des Grobabscheiders (30") einen parabolischen, zylindrischen oder kegeligen Körper mit zumindest einer offenen ersten Stirnseite, insbesondere mit einer geschlossenen zweiten Stirnseite des Zylinders oder einem der offenen ersten Stirnseite gegenüberliegenden geschlossenen Endabschnitt des parabolischen oder kegeligen Körpers, ausbildet und die Gemischzuführung (20") derart angeordnet ist, dass die Gemischströmung (70a) in Umfangsrichtung des parabolischen, zylindrischen oder kegeligen Körpers tangential entlang der parabolischen, zylindrischen oder kegeligen Abscheidefläche in Richtung der offenen ersten Stirnseite geführt wird.

10. Die Flüssigkeitsabscheidevorrichtung nach einem der vorhergehenden Ansprüche, wobei die Abscheidefläche derart gekrümmt ist, dass die Gemischströmung (70a) ausgehend von ihrer Strömungsrichtung bei Austritt aus der Gemischzuführung (20', 20", 20"') bis zum Austritt aus dem Grobabscheider (30, 30', 30", 30"') um zumindest 90°, insbesondere 120°, bevorzugt 150°, weiter bevorzugt 170°, umlenkbar ist.

11. Die Flüssigkeitsabscheidevorrichtung nach einem der vorherigen Ansprüche, wobei die Abscheidefläche zumindest teilweise profiliert ausgebildet ist und/oder eine reibungserhöhende Oberfläche aufweist.

12. Grobabscheider (30, 30', 30", 30‴) für eine Flüssigkeitsabscheidevorrichtung nach einem der Ansprüche 1 bis 11.

13. Flüssigkeitsabscheidesystem (1, 1') mit einer Flüssigkeitsabscheidevorrichtung nach einem der Ansprüche 1 bis 11 und/oder einem Grobabscheider (30, 30', 30", 30"') nach Anspruch 12, wobei die Flüssigkeitsabscheidevorrichtung derart in dem Flüssigkeitsabscheidesystem (1) angeordnet ist, dass die Gemischströmung (70a) zumindest mit einem vertikalen Strömungsanteil, insbesondere einem in Wirkrichtung der Schwerkraft gerichteten Strömungsanteil, aus dem Grobabscheider (30, 30', 30") austritt und/oder das Flüssigkeitsabscheidesystem (1, 1') einen weiteren Flüssigkeitsabscheider (40) aufweist, der derart angeordnet ist, dass die Gemischströmung (70a, 70b, 70c) dem weiteren Flüssigkeitsabscheider (40) zumindest abschnittsweise in einer Strömungsrichtung entgegen der Schwerkraft zuführbar ist.

14. Das Flüssigkeitsabscheidesystem (1, 1') nach Anspruch 13, wobei das Flüssigkeitsabscheidesystem (1, 1') einen Flüssigkeitssumpf (11) aufweist und der weitere Flüssigkeitsabscheider (40), insbesondere ein Feinabscheider, auf einer dem Flüssigkeitssumpf (11) in Richtung der Schwerkraft entgegengerichteten Seite angeordnet ist.

15. Das Flüssigkeitsabscheidesystem (1') nach Anspruch 13 oder 14 wobei das Flüssigkeitsabscheidesystem (1') ein Gehäuse (10‴) aufweist, das die Abscheidefläche des Grobabscheiders (30‴) ausbildet.

16. Das Flüssigkeitsabscheidesystem (1') nach Anspruch 15, wobei die Gemischzuführung (20‴) derart ausgerichtet ist, dass die Gemischströmung (70a) entgegen der Schwerkraft gerichtet ist.

## Claims

1. Liquid separation device for a compressor system, having:
a coarse separator (30, 30', 30", 30‴), which has at least one separation surface, and
at least one mixture feed (20, 20', 20", 20‴), which is configured to feed an air-liquid mixture (70) to the separation surface,
wherein the mixture feed (20, 20', 20", 20‴) is formed with a mixture feed outlet which faces toward the separation surface and is arranged relative to the separation surface of the coarse separator (30, 30', 30", 30‴) such that a mixture flow (70a) that impinges on the separation surface is guided substantially tangentially over at least a portion of the separation surface,
wherein the liquid separation device is **characterized in that** the separation surface, facing toward the mixture feed (20', 20", 20‴), of the coarse separator (30', 30", 30‴) is substantially concavely curved at least in a cross-sectional portion through which the mixture flow (70a) is intended to pass, and the mixture feed (20', 20", 20"') is arranged such that the mixture flow (70a) is at least partially guided substantially along the concave curvature, and
wherein the separation surface of the coarse separator (30') is parabolic or dome-shaped and the mixture feed (20') is arranged such that the mixture flow (70a) is guided at least from one side of the separation surface to the other side of the separation surface via a parabolic direction reversal or a dome arch.

2. Liquid separation device according to claim 1, wherein the cross-section of the mixture feed outlet facing toward the separation surface is smaller than or equal to, in particular smaller than or equal to half of, preferably smaller than or equal to one third of, an outlet area of the mixture flow (70a) from the coarse separator (30, 30', 30", 30‴).

3. Liquid separation device according to claim 1 or 2, wherein the mixture feed (20', 20", 20"') is connected or can be connected to the coarse separator (30', 30", 30‴) in a fixed position.

4. Liquid separation device according to claim 3, wherein the connection of the mixture feed (20', 20", 20‴) to the coarse separator (30', 30", 30‴) has connecting means, in particular at least one connecting strut (20a', 20b', 20c'), preferably three, wherein the connecting strut or the connecting struts are furthermore preferably deformable.

5. Liquid separation device according to claim 3 or 4, wherein the relative position of the mixture feed (20', 20", 20‴) and the coarse separator (30', 30", 30‴) is adjustable by means of an adjustment device.

6. Liquid separation device according to any one of claims 3 to 5, wherein the connection of the mixture feed (20', 20", 20‴) to the coarse separator (30', 30", 30‴) is releasable.

7. Liquid separation device according to any one of claims 3 to 5, wherein the mixture feed (20', 20", 20‴) and the coarse separator (30', 30", 30‴) are formed integrally.

8. Liquid separation device according to any one of the preceding claims, wherein the separation surface of the coarse separator (30') is in the form of a dome tapering conically towards the dome tip.

9. Liquid separation device according to any one of the preceding claims, wherein the separation surface of the coarse separator (30") forms a parabolic, cylindrical or conical body with at least an open first end side, in particular with a closed second end side of the cylinder or a closed end portion, situated opposite the open first end side, of the parabolic or conical body, and the mixture feed (20") is arranged such that the mixture flow (70a) is guided in a circumferential direction of the parabolic, cylindrical or conical body tangentially along the parabolic, cylindrical or conical separation surface in the direction of the open first end side.

10. Liquid separation device according to any one of the preceding claims, wherein the separation surface is curved such that the mixture flow (70a) can, proceeding from its flow direction when exiting the mixture feed (20', 20", 20‴) to the point at which it exits the coarse separator (30, 30', 30", 30‴), be diverted through at least 90°, in particular 120°, preferably 150° and more preferably 170°.

11. Liquid separation device according to any one of the preceding claims, wherein the separation surface is at least partially profiled and/or has a friction-increasing surface.

12. Coarse separator (30, 30', 30", 30‴) for a liquid separation device according to any one of claims 1 to 11.

13. Liquid separation system (1, 1') having a liquid separation device according to any one of claims 1 to 11 and/or having a coarse separator (30, 30' 30", 30‴) according to claim 12, wherein the liquid separation device is arranged in the liquid separation system (1) such that the mixture flow (70a) exits the coarse separator (30, 30', 30") at least with a vertical flow component, in particular with a flow component oriented in a direction of action of gravitational force, and/or the liquid separation system (1, 1') has a further liquid separator (40) which is arranged such that the mixture flow (70a, 70b, 70c) can be fed to the further liquid separator (40) at least partially in a flow direction oriented counter to gravitational force.

14. Liquid separation system (1, 1') according to claim 13, wherein the liquid separation system (1, 1') has a liquid sump (11), and the further liquid separator (40), in particular a fine separator, is arranged on a side that is situated opposite the liquid sump (11) as viewed in the direction of gravitational force.

15. Liquid separation system (V) according to claim 13 or 14, wherein the liquid separation system (1') has a housing (10‴) that forms the separation surface of the coarse separator (30‴).

16. Liquid separation system (1') according to claim 15, wherein the mixture feed (20‴) is oriented such that the mixture flow (70a) is directed counter to gravitational force.

## Revendications

1. Dispositif de séparation de liquide pour un système de compresseur présentant :
un séparateur grossier (30, 30', 30", 30‴) qui présente au moins une surface de séparation et
au moins une alimentation en mélange (20, 20', 20", 20‴) qui est configurée afin de fournir à la surface de séparation un mélange d'air et de liquide (70),
dans lequel l'alimentation en mélange (20, 20', 20", 20‴) est formée avec une sortie d'alimentation en mélange tournée vers la surface de séparation, sortie qui est agencée par rapport à la surface de séparation du séparateur grossier (30, 30', 30", 30‴) de telle manière qu'un écoulement de mélange (70a) touchant la surface de séparation soit mené sensiblement tangentiellement sur au moins une section de la surface de séparation,
dans lequel le dispositif de séparation de liquide se distingue du fait que la surface de séparation du séparateur grossier (30', 30", 30‴) tournée vers l'alimentation en mélange (20', 20", 20‴) est formée au moins dans une partie de section transversale à traverser par l'écoulement de mélange (70a) de manière courbée sensiblement concave et l'alimentation en mélange (20', 20", 20‴) est agencée de telle manière que l'écoulement de mélange (70a) soit mené au moins par sections sensiblement le long de la courbure concave et
dans lequel la surface de séparation du séparateur grossier (30') est formée en parabole ou en dôme et l'alimentation en mélange (20') est agencée de telle manière que l'écoulement de mélange (70a) soit mené au moins d'un côté de la surface de séparation par le biais d'une inversion de direction parabolique ou un arc de dôme de l'autre côté de la surface de séparation.

2. Dispositif de séparation de liquide selon la revendication 1, dans lequel la section transversale de la sortie d'alimentation en mélange tournée vers la surface de séparation est inférieure ou égale, en particulier inférieure ou égale à la moitié, de préférence inférieure ou égale à un tiers, d'une surface de sortie de l'écoulement de mélange (70a) du séparateur grossier (30, 30', 30", 30‴).

3. Dispositif de séparation de liquide selon la revendication 1 ou 2, dans lequel l'alimentation en mélange (20', 20", 20‴) est ou peut être reliée en position fixe au séparateur grossier (30', 30", 30‴).

4. Dispositif de séparation de liquide selon la revendication 3, dans lequel la liaison de l'alimentation en mélange (20', 20", 20‴) avec le séparateur grossier (30', 30", 30‴) présente des moyens de liaison, en particulier au moins une nervure de liaison (20a', 20b', 20c'), de préférence trois, dans lequel la nervure de liaison ou les nervures de liaison sont formées en outre de préférence de manière déformable.

5. Dispositif de séparation de liquide selon la revendication 3 ou 4, dans lequel la position relative de l'alimentation en mélange (20', 20", 20‴) et du séparateur grossier (30', 30", 30‴) peut être adaptée par le biais d'un dispositif d'adaptation.

6. Dispositif de séparation de liquide selon l'une quelconque des revendications 3 à 5, dans lequel la liaison de l'alimentation en mélange (20', 20", 20‴) avec le séparateur grossier (30', 30", 30‴) est formée de manière détachable.

7. Dispositif de séparation de liquide selon l'une quelconque des revendications 3 à 5, dans lequel l'alimentation en mélange (20', 20", 20‴) et le séparateur grossier (30', 30", 30‴) sont formés d'un seul tenant.

8. Dispositif de séparation de liquide selon l'une quelconque des revendications précédentes, dans lequel la surface de séparation du séparateur grossier (30') est formée sous la forme d'un dôme se rétrécissant en cône vers le sommet de dôme.

9. Dispositif de séparation de liquide selon l'une quelconque des revendications précédentes, dans lequel la surface de séparation du séparateur grossier (30") forme un corps parabolique, cylindrique ou conique avec au moins un premier côté avant ouvert, en particulier avec un second côté avant fermé du cylindre ou une section d'extrémité fermée opposée au premier côté avant ouvert du corps parabolique ou conique, et l'alimentation en mélange (20") est agencée de telle manière que l'écoulement de mélange (70a) soit mené dans le sens périphérique du corps parabolique, cylindrique ou conique tangentiellement le long de la surface de séparation parabolique, cylindrique ou conique en direction du premier côté avant ouvert.

10. Dispositif de séparation de liquide selon l'une quelconque des revendications précédentes, dans lequel la surface de séparation est courbée de telle manière que l'écoulement de mélange (70a) puisse être dévié à partir de son sens d'écoulement lors de la sortie de l'alimentation en mélange (20', 20", 20‴) jusqu'à la sortie du séparateur grossier (30, 30', 30", 30‴) d'au moins 90°, en particulier de 120°, de préférence de 150°, de manière davantage préférée de 170°.

11. Dispositif de séparation de liquide selon l'une quelconque des revendications précédentes, dans lequel la surface de séparation est formée au moins partiellement profilée et/ou présente une surface augmentant la friction.

12. Séparateur grossier (30, 30', 30", 30‴) pour un dispositif de séparation de liquide selon l'une quelconque des revendications 1 à 11.

13. Système de séparation de liquide (1, 1') avec un dispositif de séparation de liquide selon l'une quelconque des revendications 1 à 11 et/ou un séparateur grossier (30, 30', 30", 30‴) selon la revendication 12, dans lequel le dispositif de séparation de liquide est agencé dans le système de séparation de liquide (1) de telle manière que l'écoulement de mélange (70a) sorte au moins avec une part d'écoulement verticale, en particulier une part d'écoulement dirigée dans le sens actif de la force de gravité, du séparateur grossier (30, 30', 30") et/ou le système de séparation de liquide (1, 1') présente un autre séparateur de liquide (40) qui est agencé de telle manière que l'écoulement de mélange (70a, 70b, 70c) puisse être fourni à l'autre séparateur de liquide (40) au moins par sections dans un sens d'écoulement inverse à la force de gravité.

14. Système de séparation de liquide (1, 1')selon la revendication 13, dans lequel le système de séparation de liquide (1, 1') présente un réservoir de liquide (11) et l'autre séparateur de liquide (40), en particulier un séparateur fin, est agencé sur un côté dirigé dans le sens inverse du réservoir de liquide (11) en direction de la force de gravité.

15. Système de séparation de liquide (V) selon la revendication 13 ou 14, dans lequel le système de séparation de liquide (1') présente un boîtier (10‴) qui forme la surface de séparation du séparateur grossier (30‴).

16. Système de séparation de liquide (1') selon la revendication 15, dans lequel l'alimentation en mélange (20‴) est orienté de telle manière que l'écoulement de mélange (70a) soit dirigé dans le sens inverse de la force de gravité.
